# EUROPÄISCHE PATENTSCHRIFT

(11) **EP 0 943 486 B1**
(45) Veröffentlichungstag und Bekanntmachung des Hinweises auf die Patenterteilung: **03.12.2003**
(21) Anmeldenummer: 99250076.9
(22) Anmeldetag: 12.03.1999
(51) Int. Cl.: B60N 2/20

(54) **Absenkbarer Kraftfahrzeugsitz**
Storable car seat
Siège de véhicule escamotable

(30) Priorität: 20.03.1998 DE 19812268
(43) Veröffentlichungstag der Anmeldung: 22.09.1999
(73) Patentinhaber: Faurecia Autositze GmbH & Co. KG, 31655 Stadthagen (DE); Dr.Ing.h.c. F. Porsche Aktiengesellschaft, 70435 Stuttgart (DE); ADAM OPEL AG, 65423 Rüsselsheim (DE)
(72) Erfinder: Brandes, Gerd, 30657 Hannover (DE); Ehrhard, Winfried, 64839 Münster (DE); Pache, Hans-Jürgen, 65468 Trebur (DE); Adamski, Pavel, 71069 Sindelfingen (DE); Plate, Horst, 71735 Eberdingen (DE); Zarske, Rocco, 10437 Berlin (DE)
(74) Vertreter: Seewald, Jürgen, Dipl.-Ing.

(56) Entgegenhaltungen:
- DE-A- 19 529 233
- US-A- 5 718 477

## Beschreibung

Die vorliegende Erfindung betrifft einen Kraftfahrzeugsitz gemäß dem Oberbegriff des Anspruchs 1.

Nach derartigen Kraftfahrzeugsitzen besteht Bedarf, sei es, um im Fahrzeug zusätzlichen Stauraum für Gepäck etc. schaffen zu können, oder aber, um ein für den Ausbau aus dem Fahrzeug relativ leicht handhabbares "Sitzpaket" zu haben, welches zudem bei seiner Lagerung außerhalb des Fahrzeugs, z.B. in einer Garage oder in einem Keller, relativ wenig Platz beansprucht. Nach einer aus dem Stand der Technik bekannten Lösung läßt sich eine derartige "Paketbildung" bei einem höhenverstellbaren Kraftfahrzeugsitz dadurch erreichen, daß dieser zunächst auf ein möglichst niedriges Niveau abgesenkt wird. Das kann manuell oder auch elektromotorisch erfolgen. Anschließend wird dann die Rükkenlehne geklappt, bis sie eine im wesentlichen parallele Lage zum Fahrzeugboden einnimmt, wobei ihre Vorderseite auf dem Sitzteilpolster aufliegt. Bei dieser Lösung sind das Absenken des Kraftfahrzeugsitzes und das Klappen seiner Rückenlehne zwei voneinander losgelöste Vorgänge. Das beeinträchtigt den BedienungsKomfort.

Aus der DE 195 29 233 A1 ist ein Fahrzeugsitz bekannt, dessen Rückenlehne und Sitzteil derart miteinander gekoppelt sind, daß sich der Kraftfahrzeugsitz beim Vorklappen der Rückenlehne absenkt und beim Zurückklappen der Rückenlehne anhebt. Damit wird die gewünschte Paketbildung des Kraftfahrzeugsitzes durch einen Bedienvorgang, nämlich das Lehnenklappen, realisiert, welches mit einem automatischen Absenken des Kraftfahrzeugsitzes verbunden ist.

Aufgabe der vorliegenden Erfindung ist es, einen weiteren Kraftfahrzeugsitz dieser Art zur Verfügung zu stellen.

Gelöst wird diese Aufgabe mittels eines Kraftfahrzeugsitzes mit den Merkmalen des Anspruchs 1.

Vorteilhafte Ausgestaltungen der Erfindung ergeben sich aus den Unteransprüchen.

Die Erfindung wird nachstehend anhand eines Ausführungsbeispiels näher erläutert. In der dazugehörigen Zeichnung zeigt:
- Fig. 1: einen perspektivischen Blick von schräg hinten und oben auf die Tragkonstruktion eines Kraftfahrzeugsitzes,
- Fig. 2: einen Ausschnitt A gemäß Fig. 1 in vergrößertem Maßstab,
- Fig. 3: eine Seitenansicht des Kraftfahrzeugsitzes in Paketstellung, d.h. mit maximal abgesenktem Sitzteil und einer vollständig geklappten Rückenlehne, und
- Fig. 4: einen perspektivischen Blick auf den Kraftfahrzeugsitz in Paketstellung von schräg vorn und oben.

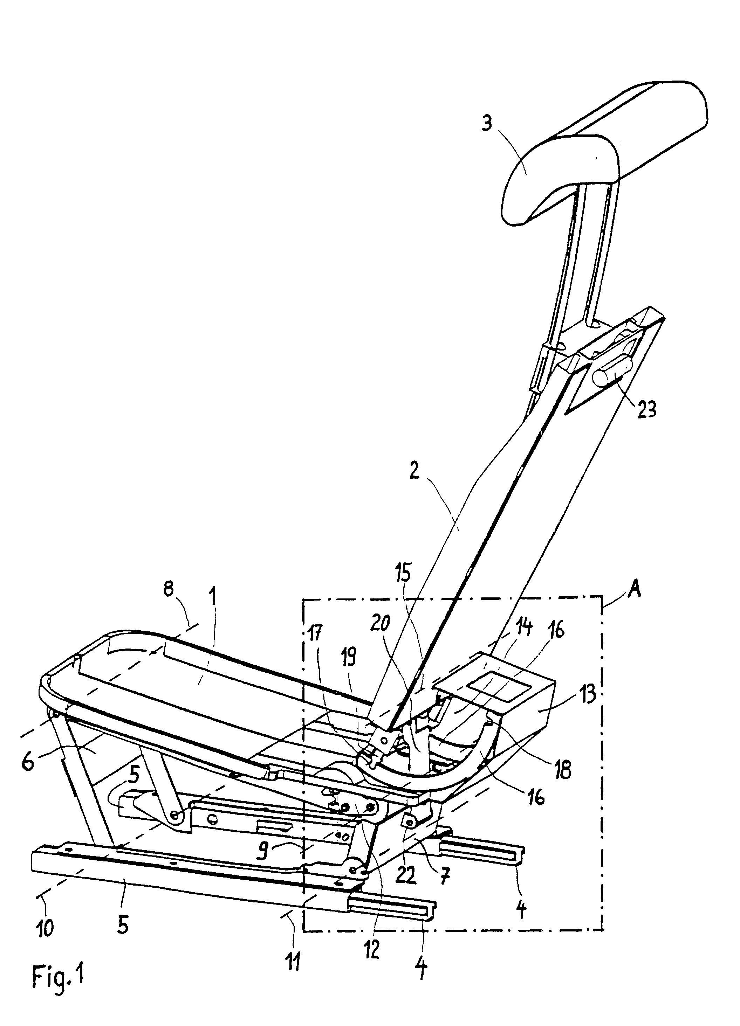

Der in Fig. 1 dargestellte Kraftfahrzeugsitz mit einem Sitzteil 1 und einer Rückenlehne 2 und einer an letzterer gelagerten Kopfstütze 3, ist längsverschiebbar auf dem nicht dargestellten Fahrzeugboden angeordnet. Dazu ist, wie üblich, ein System aus zwei parallelen Unter- 4 und Oberschienen 5 vorgesehen.

Der Kraftfahrzeugsitz ist auf einem Fußgestell, bestehend aus einer vorderen Schwinge 6 und einer hinteren Schwinge 7, abgestützt, wobei die Schwingen 6, 7 eine obere Drehachse 8 bzw. 9 mit dem Sitzteil 1 und eine untere Drehachse 10 bzw. 11 mit den Oberschienen 5 besitzen. Die Schwingen 6, 7 bilden zusammen mit dem Sitzteil 1 und den Oberschienen 5 ein sogenanntes Sitzparallelogramm. Dieses Sitzparallelogramm ist verriegelbar, wozu beidseitig zwischen der hinteren Schwinge 7 und dem Sitzteil 1 je eine Verriegelungsklinke vorgesehen ist. Die Verriegelungsklinken sind hinter Abdeckungen 12 angeordnet und daher aus der zeichnerischen Darstellung nicht ersichtlich. In der verriegelten Stellung bildet das Sitzparallelogramm somit eine starre Konstruktion.

Vom hinteren Ende des Sitzteils 1 ragt ein Kragarm 13 in Form eines geschlossenen Kastens nach oben ab, dessen dem Betrachter zugewandte Seitenwand 14 in den Fig. 1, 2 und 3 zur Veranschaulichung der Kopplung und Verrastung zwischen Rückenlehne 2 und Sitzteil 1 weggelassen worden ist. In den beiden Seitenwänden 14 des Kragarms 13 ist die Klappachse 15 der Rükkenlehne 1 gelagert.

Parallel zu den Seitenwänden 14 sind im Kragarm 13 beidseitig Segmentbleche 16 vorgesehen, die einen Rastausschnitt 17 für die Sitzlage der Rückenlehne 2 und einen Rastausschnitt 18 für die Klapplage der Rückenlehne 2 aufweisen. In den arretierten Stellungen greifen beidseitig in der Rückenlehne 2 geführte Rastnasen 19 in die Rastausschnitte 17 bzw. 18 ein. Die Segmentbleche 16 liegen auf einem Kreisbogen um die Klappachse 15 der Rückenlehne 2.

Zwischen der Rückenlehne 2 und der hinteren Schwinge 7 des Sitzparallelogramms ist ein starres Koppelelement 20 angeordnet, welches über eine Drehachse 21 an die Rückenlehne 2 und über eine Drehachse 22 an die hintere Schwinge 7 angeschlagen ist. Dabei ist die Drehachse 21 unterhalb der Klappachse 15 der Rückenlehne 2 und die Drehachse 22 zwischen den Drehachsen 11 und 9 der Schwinge 7 angeordnet. Die Drehachsen 21 und 22 des Koppelelements 20 sind in starr mit der Rückenlehne 2 bzw. mit der Schwinge 7 verbundenen Laschen 26 bzw. 27 gelagert.

Die Funktionsweise des oben statisch beschriebenen Kraftfahrzeugsitzes wird nachstehend näher erläutert. Ausgangsposition ist die in Fig. 1 dargestellte Sitzlage des Kraftfahrzeugsitzes.

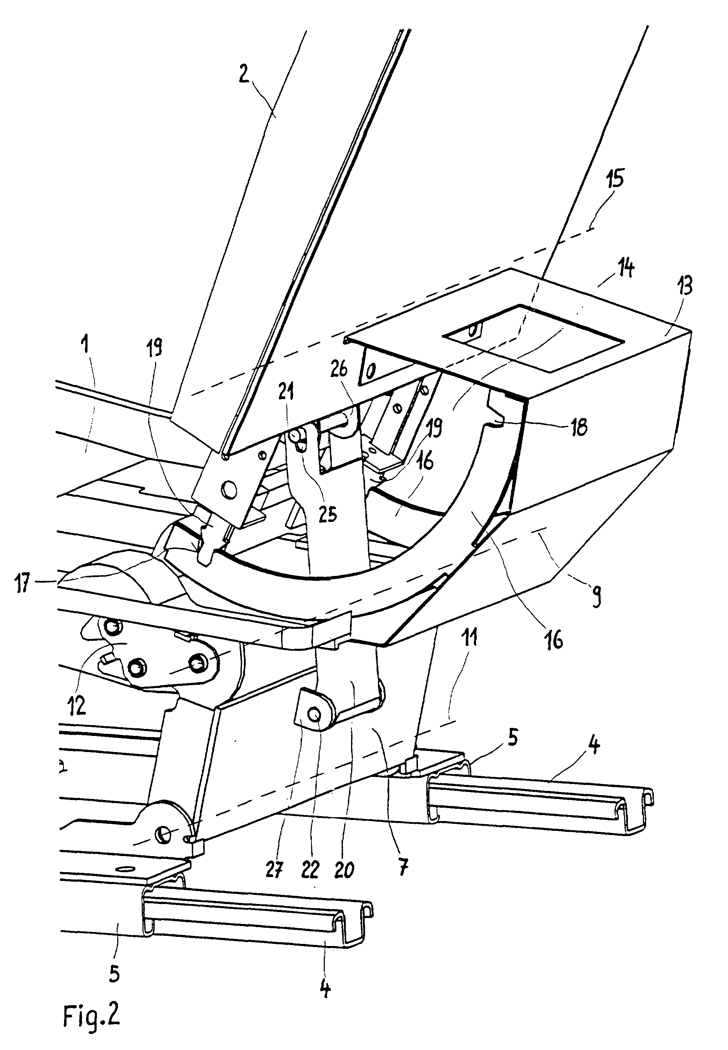

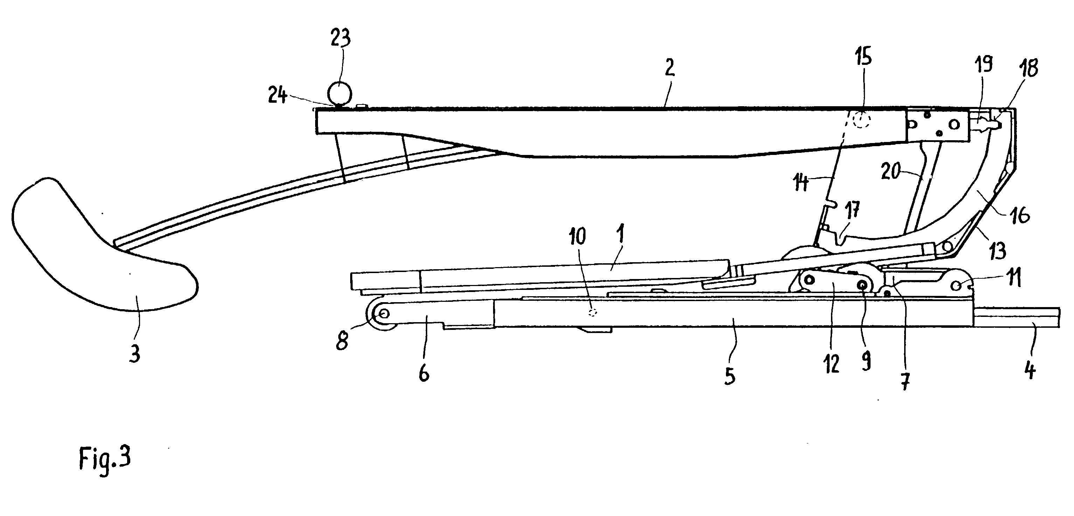

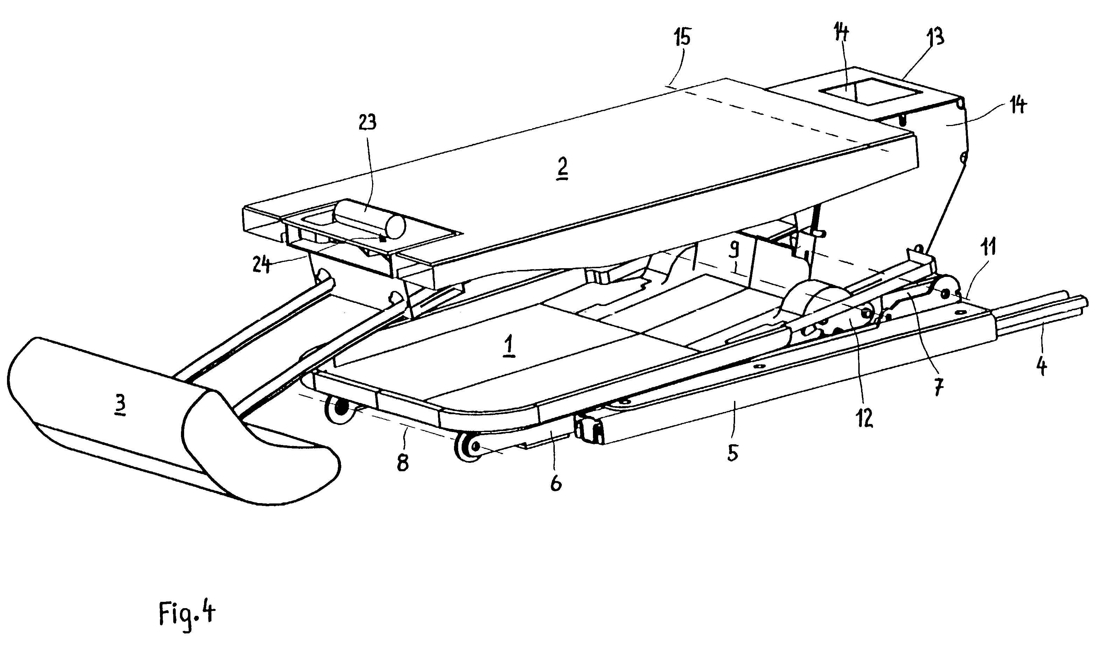

Um die Rückenlehne 2 klappen zu können, muß ihre Verriegelung mit dem Sitzteil 1 aufgehoben werden. Das geschieht durch Betätigung eines Handgriffs 23, der oben auf der Rückseite der Rückenlehne 2 schwenkbar angeordnet ist. Der Handgriff 23 ist über nicht dargestellte Seilzüge sowohl mit den Rastnasen 19 als auch mit den hinter den Abdeckungen 12 angeordneten Verriegelungsklinken des Sitzparallelogramms verbunden. Durch Schwenken des Handgriffs 23 entgegen Uhrzeigerrichtung, in den Fig. 3 und 4 ist die Schwenkachse 24 des Handgriffs 23 ersichtlich, werden die Seilzüge gezogen, d.h. die Arretierungen zwischen der Rükkenlehne 2 und dem Sitzteil 1 und des Sitzparallelogramms werden gleichzeitig aufgehoben. Die Rückenlehne 2 kann nun nach vorn geklappt werden. Dabei beschreibt die obere Drehachse 21 des Kopplungselements 20 einen Kreisbogen um die Klappachse 15 der Rückenlehne 2. Da die Rückenlehne 2 in Sitzlage schräg nach hinten geneigt ist, bewegt sich die Drehachse 21 zunächst auf diesem Kreisbogen etwas nach unten. Um diese Abwärtsbewegung zu kompensieren, sind im Koppelelement 20 Langlöcher 25 (Fig. 2) vorgesehen, in denen die Drehachse 21 gelagert ist. Diese bewegt sich also in den Langlöchern 25 zu Beginn des Klappvorgangs kurzzeitig nach unten, um dann wieder nach oben zu gehen und an die obere Wandung der Langlöcher 25 anzuschlagen. Durch das Klappen der Rückenlehne 2 wird auf das starre Koppelelement 20 Zug ausgeübt. Dieser Zug resultiert darin, daß die hintere Schwinge 7 des Sitzparallelogramms in Gegen-Uhrzeigerrichtung um ihre Drehachse 11 verschwenkt wird, d.h. das Sitzteil 1, und mithin der gesamte Fahrzeugsitz wird, gesteuert durch das Lehnenklappen, abgesenkt. Am Ende des Klappvorganges ist die Rükkenlehne 2 im wesentlichen parallel zum Fahrzeugboden ausgerichtet und das Sitzteil 1 liegt flach auf dem Fahrzeugboden. Diese Paketbildung geht gut aus den Fig. 3 und 4 hervor. In dieser Klapplage kann die Rückseite der Rückenlehne 2 als zusätzliche Ladefläche, z.B. im Anschluß an einen Kofferraum, genutzt werden.

Beim Erreichen der in den Fig. 3 und 4 dargestellten Klapplage rasten die Rastnasen 19 der Rückenlehnen-Verriegelung in die Rastausschnitte 18 der Segmentbleche 16 ein, so daß diese Klapplage arretiert ist. Soll die Sitzlage wiederhergestellt werden, ist zunächst der Handgriff 23 zu betätigen, um die Rastnasen 19 außer Eingriff mit den Rastausschnitten 18 zu bringen. Die Rückenlehne 2 kann nun zurückgeklappt werden, wodurch das Sitzteil 1 über das Koppelelement 20 automatisch in seine Sitzlage gezogen wird. Die Rückenlehne 2 bildet dabei einen genügend langen Hebel, so daß dieser Vorgang mit keiner großen Kraftanstrengung verbunden ist.

## Patentansprüche

1. Absenkbarer Kraftfahrzeugsitz mit einer um eine sitzteilfeste Klappachse (15) klappbaren Rückenlehne (2), die im in Fahrzeug eingebanten Zustand in Klapplage im wesentlichen parallel zum Fahrzeugboden ausgerichtet ist, wobei die Rückenlehne (2) und das Sitzteil (1) derart miteinander gekoppelt sind, daß sich der Kraftfahrzeugsitz beim Vorklappen der Rückenlehne (2) absenkt und beim Zurückklappen der Rückenlehne (2) anhebt, **dadurch gekennzeichnet, daß** das Sitzteil (1) auf einer vorderen (6) und einer hinteren Schwinge (7) gelagert ist, und die Schwingen (6, 7) jeweils eine obere Drehachse (8 bzw. 9) mit dem Sitzteil (1) und eine untere Drehachse (10 bzw. 11) mit dem Fahrzeugboden oder einem auf dem Fahrzeugboden verschiebbaren Bauteil (5) besitzen, wobei ein starres Koppelelement (20) vorgesehen ist, welches unterhalb der Klappachse (15) drehgelenkig an die Rückenlehne (2) und zwischen der oberen und unteren Drehachse (9, 11) drehgelenkig an die hintere Schwinge (7) angeschlagen ist.

2. Kraftfahrzeugsitz nach Anspruch 1, **dadurch gekennzeichnet, daß** vom hinteren Ende des Sitzteils (1) ein Kragarm (13) nach oben ragt, der an seinem oberen Ende die Klappachse (15) der Rückenlehne (2) aufnimmt und Raststellen (17, 18) für das im Kragarm (13) schwenkende untere Ende der Rückenlehne (2) aufweist, die der Arretierung der Rückenlehne (2) in Sitzlage bzw. in Klapplage dienen.

3. Kraftfahrzeugsitz nach Anspruch 2 mit in Sitzlage arretierbaren Schwingen (6, 7), wobei die Schwingen- und Rückenlehnen-Arretierung durch eine Handhabe (23) gleichzeitig aufhebbar sind.

4. Kraftfahrzeugsitz nach Anspruch 3, **dadurch gekennzeichnet, daß** die Handhabe (23) über Seilzüge mit den Arretierungen verbunden ist.

## Claims

1. Lowerable vehicle seat with a back rest (2) hinged about a hinge axis (15) fixed to the seat section, which, when in the installed state in the vehicle, in the hinged position is aligned essentially parallel to the vehicle floor with the back rest (2) and the seat section (1) being coupled to each other in such a way that the vehicle seat is lowered when the back rest is hinged forward and is raised when the back rest is hinged back, **characterised by** the fact that the seat section (1 ) is mounted on one front (6) and one rear (7) crank, and the cranks (6, 7) each have an upper pivot axis (8 or 9) with the seat section (1 ) and a lower pivot axis (10 or 11) with the vehicle floor, or a sliding component (5 ) on the floor of the vehicle, with a rigid coupling element (20) being provided which is mounted on a hinge joint on the back rest (2) below the hinge axis (15) and mounted on a hinge joint on the rear crank (7 ) between the upper and lower pivot axis (9, 11).

2. Vehicle seat in accordance with Claim 1, **characterised by** the fact that a jib arm (13) protrudes upwards from the rear end of the seat section (1) and on its top end supports the hinge axis (15) of the back rest (2) and has detent points (17, 18) for the bottom end of the back rest (2) swivelling in the jib arm (13), which serve to hold the back rest (2) in the sitting or in the hinged position.

3. Vehicle seat in accordance with Claim 2 with cranks (6, 7) lockable in the seating position, with the crank and back rest catch being able to be disengaged simultaneously by one handle (23)

4. Vehicle seat in accordance with Claim 3, **characterised by** the fact that the handle (23) is connected to the catches through cables.

## Revendications

1. Siège de véhicule automobile pouvant être abaissé, avec un dossier (2) rabattable autour d'un axe de rabattement (15) monté fixe sur l'assise, le dossier étant, en état monté dans le véhicule, orienté essentiellement parallèlement au fond du véhicule et couplé avec l'assise (1) de manière que le siège de véhicule automobile s'abaisse lorsque le dossier (2) est rabattu vers l'avant et remonte lorsque le dossier (2) est rabattu vers l'arrière, **caractérisé en ce que** l'assise (1) est logée sur une coulisse avant (6) et une coulisse arrière (7) et **en ce que** les coulisses (6, 7) possèdent respectivement un axe de rotation supérieur (8 ou 9) avec l'assise (1) et un axe de rotation inférieur (10 ou 11) avec le fond du véhicule ou avec un composant (5) déplaçable sur le fond du véhicule, un élément de couplage rigide (20) étant prévu, qui, au-dessous de l'axe de rabattement (15), est monté de manière articulée rotative sur le dossier (2) et, entre les axes de rotation supérieur et inférieur (9, 11), de manière articulée rotative sur la coulisse arrière (7).

2. Siège de véhicule automobile suivant la revendication 1, **caractérisé en ce qu'**un bras en porte-à-faux fait saillie vers le haut, depuis l'extrémité arrière de l'assise (1), bras qui reçoit, à son extrémité supérieure, l'axe de rabattement (15) du dossier (2) et qui présente des crans (17) pour l'extrémité inférieure du dossier (2) pivotant dans le bras en porte-à-faux (13), crans qui servent à arrêter le dossier en position d'assise ou en position de rabattement.

3. Siège de véhicule automobile suivant la revendication 2 avec des coulisses (6, 7) pouvant être arrêtées en position d'assise, l'arrêt des coulisses et du dossier pouvant être annulé simultanément au moyen d'une manette (23).

4. Siège de véhicule automobile suivant la revendication 3, **caractérisé en ce que** la manette (23) est reliée aux dispositifs d'arrêt par l'intermédiaire de câbles.
